# EUROPEAN PATENT APPLICATION

(11) **EP 4 742 196 A1**
(43) Date of publication of application: **13.05.2026**
(21) Application number: 25181224.4
(22) Date of filing: 06.06.2025
(51) Int. Cl.: G06V 30/10, G06V 30/19, G06V 30/416

(54) **SYSTEM AND METHOD FOR EXTRACTING KEY-VALUE INFORMATION USING SYNTHETIC TRAINING DATA**

(30) Priority: 12.11.2024 US 202418944651
(71) Applicant: Socure, Inc., Incline Village, NV 89451 (US)
(72) Inventor: XIAO, Feng, Incline Village, 89451 (US); ANTO, James, Incline Village, 89451 (US); NAGABANDI, Badrinath, Incline Village, 89451 (US); ABREU, Pablo Ysrrael, Incline Village, 89451 (US)
(74) Representative: Derry, Paul Stefan

(57) **Abstract**

An end to end system and methodology is employed to obtain key-value pairs from original documents and images. The system and methodology of the present invention may generate synthetic training data from a single source document image or a relatively small number of source document images and use the aforesaid synthetic training data to train a model which is capable of extracting key value pairs from documents even when the source documents do not contain a machine readable source of ground truth data and/or when there is a limited number of source documents available for model training.

## Description

### FIELD OF THE DISCLOSURE

Disclosed embodiments relate to the extraction of data contained in documents for further processing, and more specifically, to the use of machine learning systems to extract key and value pair information contained within documents when limited or no ground truth data is available and/or when limited source documents are available.

### BACKGROUND

Optical character recognition (OCR) functionality has been widely available for some time. These systems and methodologies take a document as input and produce contextual data contained within that document as an output. For example, an OCR system may scan in a physical document creating a temporary (or stored) file representing an electronic image of that document. In one case, this image file might be a PDF (Adobe Acrobat) file representing an image of the scanned document. Next, the output of the OCR system is then processed by a second stage module, such as a classification model, in an attempt to generate usable data which may consist of individual data values or key and value pairs. In some cases, more complex relationships between extracted data elements is also possible.

By way of example, a physical driver's license might be the physical document scanned with the goal of extracting information from the license with no manual human intervention. It may be desirable, for example, to scan a driver's license and extract first name, last name, date of birth, driver's license number, expiration date and/or any other data contained within the license. The data can then be used by other systems, processes, programs, etc. where the contextual data is required rather than the data being represented in image form where it would not be usable in such downstream systems, processes, programs, etc. It may also be desirable to match these extracted values with a key which describes the nature of the data (a so-called key-value pair). For instance, in order to allow for further processing of the extracted data, it may helpful to match the actual last name (e.g. "SMITH") with the descriptor for that actual value (e.g. "Last Name").

There exist numerous drawbacks in connection with obtaining such key-value pairs and/or generally extracting data from images or documents when this is accomplished using existing OCR based systems. Typical solutions implement a two stage process for capturing and generating key-value pairs from documents and images. First the image/document is scanned and character recognition is performed by the OCR system. In the second stage, the process attempts, via a classification algorithm, to match the characters generated with specific fields to form the key-value pairs. One of the problems that can occur is if the character recognition stage fails, those errors are propagated to the second stage such that the data classification occurring during the second stage can't succeed given the bad input received.

Another drawback associated with two stage solutions for generating key-value pairs is the requirement that intermediate results be generated by the first stage which is then operated upon by the second stage processing. The requirement for intermediate results requires additional processing and file storage and can thus burden the computing platform and possibly slowing down processing making some applications that require real time results with heavy processing burdens impossible or very difficult to implement.

Yet another drawback is that existing two stage systems are trained independently and as a result, certain important context information may be ignored because each of the models is unaware of the context associated with the other model. As a result, each of the models will not perform as well as preferred because, for example, words or other constructs may not be readily identifiable without the context associated with these constructs which is known to the other model with respect to a particular application. For example, in an image of an ID document, there may be a smudge on the word "name" which is a key of a key-value pair. In existing solutions, where two different models are trained independently, the key "name" may be lost since due to the "name" key being smudged and the fact that the models, being trained independently, are likely to lose the key "name" due to the smudge obscuring it on the physical ID document.

In a co-pending application (US Serial No. 18/426,991 entitled "Generative AI System and Method for Key and Value Pair Information Extraction from Documents") assigned to the assignee of the present invention, a system and methodology addressing the foregoing drawbacks is described. The system and methodology described in the co-pending application uses machine learning and trained models to obtain key value pairs from original documents. As described in the co-pending application, the original documents used to train the models typically contain ground truth data in the form of machine readable data associated with the original documents such as a bar code located on a driver's license used for training the model.

Unfortunately, in some cases even with the foregoing solution, there may be a limited number of original documents available to use in connection with model training. In addition, the documents available for training may lack ground truth data such as machine readable bar codes which would otherwise be used in training the models. Examples of when this occurs may include, for example, driver's license or identification documents from smaller countries where it is difficult to obtain sample documents and/or those documents do not contain ground truth data. While countries like the US and Canada offer driver's licenses and passports that contain machine readable data, other countries, such as Belgium, currently do not include machine readable data on driver's licenses. In addition, sample driver's licenses used to train a model may not be readily available, or may only be available in small quantities in some of these countries thus making it very difficult to robustly train a model to a level where it is usable in extracting key value pairs.

Thus, as will be understood, there is a need for a system and methodology in which images and documents can be processed to generate key-value pairs even when there is limited available of source documents for model training and/or those source documents lack machine readables indicative of the ground truth.

### SUMMARY OF THE INVENTION

It is to be understood that both the following summary and the detailed description are exemplary and explanatory and are intended to provide further explanation of the present embodiments as claimed. Neither the summary nor the description that follows is intended to define or limit the scope of the present embodiments to the particular features mentioned in the summary or in the description. Rather, the scope of the present embodiments is defined by the appended claims.

Embodiments may include a method and system which enhances the generation of key-value pairs from documents and images using machine learning techniques wherein a model is trained and the resulting model is used in production to more effectively and efficiently generate key-value pairs from documents and images.

According to the teachings herein, the disclosed method and system can enhance the generation of key-value pairs from documents and images using machine learning techniques and one or more trained models and may function with respect to a broad set of documents including those in languages other than English (including both Latin and non-Latin based languages) and various scripts.

The system and methodology of the present invention, in some embodiments, may generate synthetic training data from a single source document image or a relatively small number of source document images and use the aforesaid synthetic training data to train a model which is capable of extracting key value pairs from documents even when the source documents do not contain a machine readable source of ground truth data and/or when there is a limited number of source documents available for model training.

In some embodiments, the system and methodology of the present invention may generate synthetic training data by creating a relatively large number of variations with respect to the original form of the document and using the collection of variations for model training.

The system and methodology of the present invention, in some embodiments, may employ an object detection convolutional neural network algorithm to detect and localize data fields on an original image such as a driver's license, product package or any other image or physical object containing one or more data items associated with an expected field.

According to the teachings of the present invention, category and key value information for a specific document template is labeled. Once that is accomplished, synthetic data associated with that document template is generated using a limited number of source documents which may or may not contain machine readable data such as bar codes. The synthetic data is generated by enabling a very large number of variations as applied to one or a small number of source documents. These variations represent a collection of synthetic data which may then be used to train a model used to analyze documents and/or images containing data associated with specifically anticipated fields as represented by the labeled category and key value information specified for the specific document type. Once the system is placed into production, the trained model is applied as against newly provided documents and/or images to obtain key-value pairs which can be used in various downstream applications where the key-value pairs are required for further processing.

In some embodiments of the present invention, documents such as driver's licenses may be processed by an OCR model to extract text and location information associated with key value pairs for a specific document template. The output of the OCR model may then be fed into a second model for training. Once trained, system implementing the second model is able to efficiently recognize and generate key-value pairs from various types of documents such as driver's licenses including those from different states and countries and with different layouts and data characteristics contained within the driver's licenses. Extraction of data is possible according to the teachings of the present invention even if limited source documents are available for model training and/or if the source documents used for training lack machine readables. In some embodiments, a large set of synthetically generated OCR model output data may be generated for use in connection with training of the second model which is then used in production to extract key value pairs from documents for which the model has been trained.

This key-value information acquired from the driver's license or other document types may then be used in connection with many downstream applications including, for example, various identity verification solutions as well as fraud detection systems in order to make determinations with respect to whether transactions and/or other processes should be allowed to proceed given the information obtained from the provided verification document such as a driver's license.

### BRIEF DESCRIPTION OF THE DRAWINGS

**Figure 1** is a diagram depicting the major components of the system of the present invention, including various elements with which the system of the present invention may interact, in some embodiments thereof;
**Figure 2** is a flowchart illustrating the major steps implemented by the system of the present invention in connection with model training and production usage, in some embodiments thereof;
**Figure 3** is an illustration demonstrating the category and key value labeling aspects using a source document during training in accordance with the teachings of the present invention;
**Figure 4** is an illustration of the original source document of **Figure 3****,** and illustrating some of the possible techniques which can be applied during training to generate variations of the original source document according to the teachings of the present invention, in some embodiments thereof;
**Figure 5** is an illustration of the application of the first and second models at production time in connection with key value extraction from an original document according to the teachings of the present invention, in some embodiments thereof; and
**Figure 6** is another illustration demonstrating the production aspects of present invention including the generation of key-value pairs (with the intermediate step of generating OCR output) from an original document or image according to the teachings contained herein.

### DETAILED DESCRIPTION OF THE INVENTION

The present disclosure will now be described in terms of various exemplary embodiments. This specification discloses one or more embodiments that incorporate features of the present embodiments. The embodiment(s) described, and references in the specification to "one embodiment", "an embodiment", "an example embodiment", etc., indicate that the embodiment(s) described may include a particular feature, structure, or characteristic. Such phrases are not necessarily referring to the same embodiment. The skilled artisan will appreciate that a particular feature, structure, or characteristic described in connection with one embodiment is not necessarily limited to that embodiment but typically has relevance and applicability to one or more other embodiments.

In the several figures, like reference numerals may be used for like elements having like functions even in different drawings. The embodiments described, and their detailed construction and elements, are merely provided to assist in a comprehensive understanding of the present embodiments. Thus, it is apparent that the present embodiments can be carried out in a variety of ways, and does not require any of the specific features described herein. Also, well-known functions or constructions are not described in detail since they would obscure the present embodiments with unnecessary detail.

The description is not to be taken in a limiting sense, but is made merely for the purpose of illustrating the general principles of the present embodiments, since the scope of the present embodiments are best defined by the appended claims.

It should also be noted that in some alternative implementations, the blocks in a flowchart, the communications in a sequence-diagram, the states in a state-diagram, etc., may occur out of the orders illustrated in the figures. That is, the illustrated orders of the blocks/communications/states are not intended to be limiting. Rather, the illustrated blocks/communications/states may be reordered into any suitable order, and some of the blocks/communications/states could occur simultaneously.

All definitions, as defined and used herein, should be understood to control over dictionary definitions, definitions in documents incorporated by reference, and/or ordinary meanings of the defined terms.

The indefinite articles "a" and "an," as used herein in the specification and in the claims, unless clearly indicated to the contrary, should be understood to mean "at least one."

The phrase "and/or," as used herein in the specification and in the claims, should be understood to mean "either or both" of the elements so conjoined, i.e., elements that are conjunctively present in some cases and disjunctively present in other cases. Multiple elements listed with "and/or" should be construed in the same fashion, i.e., "one or more" of the elements so conjoined. Other elements may optionally be present other than the elements specifically identified by the "and/or" clause, whether related or unrelated to those elements specifically identified. Thus, as a non-limiting example, a reference to "A and/or B", when used in conjunction with open-ended language such as "comprising" can refer, in one embodiment, to A only (optionally including elements other than B); in another embodiment, to B only (optionally including elements other than A); in yet another embodiment, to both A and B (optionally including other elements); etc.

As used herein in the specification and in the claims, "or" should be understood to have the same meaning as "and/or" as defined above. For example, when separating items in a list, "or" or "and/or" shall be interpreted as being inclusive, i.e., the inclusion of at least one, but also including more than one, of a number or list of elements, and, optionally, additional unlisted items. Only terms clearly indicated to the contrary, such as "only one of or "exactly one of," or, when used in the claims, "consisting of," will refer to the inclusion of exactly one element of a number or list of elements. In general, the term "or" as used herein shall only be interpreted as indicating exclusive alternatives (i.e. "one or the other but not both") when preceded by terms of exclusivity, such as "either," "one of," "only one of," or "exactly one of "Consisting essentially of," when used in the claims, shall have its ordinary meaning as used in the field of patent law.

As used herein in the specification and in the claims, the phrase "at least one," in reference to a list of one or more elements, should be understood to mean at least one element selected from any one or more of the elements in the list of elements, but not necessarily including at least one of each and every element specifically listed within the list of elements and not excluding any combinations of elements in the list of elements. This definition also allows that elements may optionally be present other than the elements specifically identified within the list of elements to which the phrase "at least one" refers, whether related or unrelated to those elements specifically identified. Thus, as a non-limiting example, "at least one of A and B" (or, equivalently, "at least one of A or B," or, equivalently "at least one of A and/or B") can refer, in one embodiment, to at least one, optionally including more than one, A, with no B present (and optionally including elements other than B); in another embodiment, to at least one, optionally including more than one, B, with no A present (and optionally including elements other than A); in yet another embodiment, to at least one, optionally including more than one, A, and at least one, optionally including more than one, B (and optionally including other elements); etc.

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element, without departing from the scope of example embodiments. As used herein, the term "and/or" includes any and all combinations of one or more of the associated listed items. As used herein, the singular forms "a", "an" and "the" are intended to include the plural forms as well, unless the context clearly indicates otherwise.

The word "exemplary" is used herein to mean "serving as an example, instance, or illustration." Any embodiment described herein as "exemplary" is not necessarily to be construed as preferred or advantageous over other embodiments. Additionally, all embodiments described herein should be considered exemplary unless otherwise stated.

Aspects of the present disclosure are directed to key-value pair extraction methodologies such that such key-value pairs can be accurately and efficiently obtained from physical documents and images. In some embodiments, the methodology calls for first training the system to most effectively identify expected key-value pairs, following training of the system, the system is deployed in production to obtain key-value pairs from documents and images even in cases where these key-value pairs would not be accurately obtained through the use of existing solutions, where limited source documents are available for training and/or source documents for training are lacking a machine readable source of ground truth. In some embodiments, training of the system continues in production as additional documents and images are scanned and extraction is performed. Machine learning techniques are employed in order to train the system to be as effective as possible. In some embodiments, key-value extraction is performed in connection with identity verification and/or fraud detection solutions.

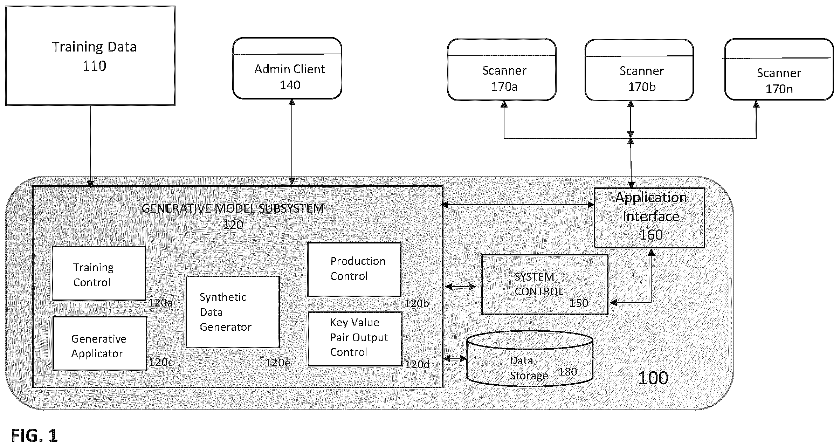

Referring now to FIG. 1, there is illustrated a Key Value Extraction System (KVES) 100 according to one or more embodiments herein. KVES 100 may reside on a single cloud based server although it is also possible for various components of KVES 100 (as described herein) to reside on separate servers. By way of example, KVES 100 may be a computer implemented application which resides on a computing server. As will be apparent from the discussion herein, KVES 100 may include and/or implement all appropriate software and/or hardware for carrying out its key-value pair extraction functionalities and related capabilities. Operation of KVES 100 is under the control of system control 150.

KVES 100 preferably includes Generative Model Subsystem (GMS) 120, which itself is comprised of a number of modules as discussed further herein. GMS 120 operates to extract key-value pairs contained in images and documents which are scanned into KVES 100 following training of GMS 120 as more fully described herein. Documents and/or images are scanned into KVES 100 through scanners 170a, 170b .... 170n which communicate with KVES 100 via application interface 160. Application interface 160 may comprise one or more application programming interfaces (APIs) that permit applications associated with scanners 170 to communicate with KVES 100.

Scanners 170 may be one of many known devices currently available for the purpose of scanning images, documents or any other physical object. Examples of images and documents which fall within the scope and spirit of the present invention include driver's licenses, passports, credit cards, ID cards, social security cards, papers, photos, screen shots and many other physical objects and viewable collections of data from which data can be collected. This invention is limited only by the scope of the claims and may include capture of data from any source for which capture of key-value pairs is desired.

It should also be noted that capture of information via scanning according to the teachings of the present invention may be accomplished in various ways. For example, in the case of a driver's license, KVES 100 may capture data either through a scan of the image on the front and/or back of the license where, for example, name, address and other information is listed. Alternatively or in addition, driver's licenses (and other document types) may contain one or more bar codes containing the same or additional information.

The system of the present invention can also read bar codes as is known in the art to capture data values. In some cases, bar coded information may contain key-value pair information which can be used in either or both of the training of the system of the present invention or in production use or in both as discussed in more detail below. Notwithstanding the foregoing, one unique aspect of the present invention is the system's ability to train a model even in the absence of source documents lacking bar coded information such as with respect to driver's license and other identifying documents for some jurisdictions outside of the United States and Canada.

Scanners 170 are used to read and capture the information contained on the document/image. Scanners 170 may communicate with KVES 100 via a wired connection or wirelessly. Alternatively, scanners 170 may communicate with a hub (through a wired or wireless connection) and the hub in turn communicates with KVES 100 via the internet or some other public or private network. Examples of scanners 170 which may be used in connection with the systems and methodologies of the present invention include pen wands, slot scanners, CCD scanners, image scanners and laser scanners as well as other devices capable of scanning in images and documents. In some embodiments, scanners 170 may include an OCR functionality that takes source documents as input and generates OCR output data which is used to train a model used in production to extract key-value pairs from documents. OCR functionality may alternatively or in addition reside on KVES 100. As will be discussed below, the OCR output data generated though document scans may be supplemented with large amounts of synthetic OCR output data used to train the production model.

KVES 100 may be accessed, in some embodiments, by an administrative client 140 for the purpose of administrating the operation of the KVES 100 including how and when training is performed as well as various operational aspects associated with the handling of images and documents as they are provided to KVES 100 via scanners 170 for the purpose of extracting key-value pairs. Admin client 140 may comprise a personal computer, a laptop, a handheld computing device such as a smartphone or a tablet or any other similar device.

As will be further detailed in the present description, training data 110 may be provided to KVES 100, and GMS 120 in particular, in order to train GMS 120 to most effectively and accurately extract key-value pairs from documents and images. In some embodiments, results obtained from training operations (including, for example, expected key-value pairs associated with certain types of documents) may be stored in data storage 180. In some embodiments, data storage 180 may alternatively or in addition store data associated with the extraction of key-value pairs such as field names, data classifications, typical document layout information and other related data generated during the training and/or production operation of GMS 120 in accordance with the teachings of the present invention. This data may, in some embodiments, be used in connection with the initial and/or ongoing training of GMS 120.

Returning now to the specific components of KVES 100, KVES 100 may include various components for training itself as well as extracting key-value pairs from documents and images to increase the likelihood that the correct data contained on these original sources are captured and correctly classified despite low image quality, deviations in data fields and data layouts, smudges, tears and other complexities associated with extracting data from documents and images and classifying it accordingly.

KVES 100 may reside on one or more physical servers. These servers may include electronic storage, one or more processors, and/or other components. The servers may also include communication lines, or ports to enable the exchange of information with a network and/or other computing platforms. The servers may include a plurality of hardware, software, and/or firmware components operating together to provide the functionality attributed herein to KVES 100.

Electronic storage associated with the servers may comprise non-transitory storage media that electronically stores information. The electronic storage media of electronic storage may include one or both of system storage that is provided integrally (i.e., substantially non-removable) with servers and/or removable storage that is removably connectable to the servers via, for example, a port or a drive.

Electronic storage may include one or more of optically readable storage media (e.g., optical disks, etc.), magnetically readable storage media (e.g., magnetic tape, magnetic hard drive, floppy drive, etc.), electrical charge-based storage media (e.g., EEPROM, RAM, etc.), solid-state storage media (e.g., flash drive, etc.), and/or other electronically readable storage media. Electronic storage may include one or more virtual storage resources (e.g., cloud storage, a virtual private network, and/or other virtual storage resources). Electronic storage may store software algorithms, information determined by processors, information received from servers, information received from scanners 170 and admin client 140 as well as training data 110, and/or other information that enables the servers to function as described herein.

While an exemplary architecture is described above, it will readily be understood by one of skill in the art, that an unlimited number of architectures and computing environments are possible while still remaining within the scope and spirit of the present embodiments.

Returning now to the specific components of Generative Model Subsystem (GMS) 120 shown in FIG. 1, GMS 120 includes various components which are described hereinbelow. Operation(s) of each of these components will be described at a high level now and then in further detail later in the present disclosure.

In some embodiments, GMS 120 includes training control module 120a. This module is responsible for managing the training process required to train GMS 120 to recognize key-value pairs on a wide variety of documents and images. This includes processing sample documents and images contained within training data 110 during the training phase and applying machine learning techniques to develop a synthetic data set which is used to train a model, with that model, in turn, being used during the production phase to identify and extract key-value pairs from documents and images. In some embodiments, GMS 120 may autogenerate a very large set of synthetic data (example images and documents) based on a base set of training data sourced from training data 110 external to system 100 as more fully described herein. Alternatively training data 110 may comprise sufficient externally generated data so as to adequately initially train GMS 120. If possible, GMS 120 generates or has made available to it large amounts of sample images and documents which are processed to train the model to recognize documents and images with the same or similar layouts and/or classifications as they are presented to system 100 during production processing. Alternatively, synthetic data is generated by GMS 120 as more fully described herein and such synthetic data is used to train the model.

So, for example, training control 120a may operate to manage the provision of thousands (or some larger or smaller number) of example driver's licenses from various US states and from other countries as part of training data 110. Training data 110 may also include various other document types such as social security cards from various years (possibly with different formats), passports from various countries, images such as invoices, product labels and other documents and images which may be of a classification/type which could be later seen by system 100 during production for extraction of key-value pairs.

Key-value pair data contained on these documents and images may comprise personal information such as names, date of birth, address, credit card information, social security number, gender, drivers' license number, etc. and/or information associated with a product such SKU number, price, quantity, product description, etc. Additional details regarding the training process according to the teachings of the present invention in some embodiments are provided below. As noted above, in the case of document templates that are not US or Canada based, there is a reasonable likelihood that only a limited number of source documents (e.g. foreign driver's licenses) may be available for training. Similarly, these foreign documents (such as foreign driver's licenses and/or passports) may not include machine readable elements such as bar codes that provide the ground truth for the actual data.

So, in this case, where there may be smudges or other defects in the image of the document, the ground truth that would otherwise be available through a machine readable is not available and a different methodology for training the model is required. According to the teachings of the present invention, model training can be accomplished with only a single source document for the template (e.g. a single Belgian driver's license) through the generation of variations to the single source document generated as OCR output data used to train a production model as more fully described herein. The generation of these variations is enabled by synthetic data generator 120e and model training employing these variations is under the control of training control 120a.

Another component contained within GMS 120 in some embodiments of the present invention is generative applicator 120c. Generative applicator (as well as the previously mentioned components) works under the control of training control 120a. As described above, training control 120a manages the process of initial training of the model prior to production use and also, in some embodiments, manages the process of continued refinement of the model during production as a result of additional document and image inputs, generation of additional synthetic training data, and application of machine learning techniques as further discussed herein.

Generative applicator 120c, in some embodiments of the present invention, operates to develop the model based upon labeled key-value pairs used as the ground truth. These labels can be generated by system or developed manually as further discussed below. Generative applicator 120c further receives a scanned image corresponding to a label as part of training data 110. In some embodiments, generative applicator 120c develops the model using the synthetic data generated by synthetic data generator 120e which may be in the form of a typical OCR output as more fully described below.

Key-value pair output control component 120d is also included within GMS 120 according to the present invention, in some embodiments thereof. Key-value output control 120d operates under the control of production control component 120b during production operations and functions to generate, in a production environment, model output key-value pairs extracted from images and documents input to system 100 via one or more scanners 170. In some embodiments, during production, upon a scan of a document or image by reader 170 and under the direction of system control 150, GMS 120 implements the trained model and, in particular, key-value pair output control 120e functions to generate one or more key-value pairs extracted from the original document or image. These key-value pairs may, in turn, be stored in data storage 180 for use in further training of GMS 120 and/or for downstream use in connection with another application, system or subsystem. In the case of downstream use of the extracted key-value pairs, the extracted data may be communicated by system 100 to another system, such as an identity verification or fraud detection system or other application where the key-value pairs are of use in processing.

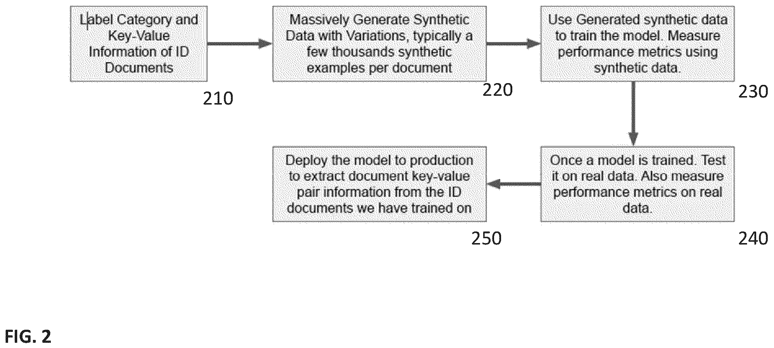

Turning now to FIG. 2 and in connection therewith, a more detailed discussion of the overall process for training and deploying the system of the present invention in some embodiments is now provided. The following discussion assumes training based upon an identity document such as a driver's license for the purpose of identity verification. One of ordinary skill in the art will readily recognize that the teachings of the present invention may be applied in many other contexts including in any case where there exists a document, image, label or other physical element capable of being scanned with the goal of accurately extracting key-value pairs from similar documents, labels or other physical elements which are provided to KVES 100 in a production environment once the system has been trained.

The following discussion assumes that a limited number of source documents are available for training and/or the available source documents lack a machine readable for ground truth verification. This may be the case, for example, when training the model to extract key-value pairs from identity documents such as driver's licenses, passports and other identification documents that are used in foreign jurisdictions such as those outside of the United States and Canada. In such case, the system and methodology of the present invention generates synthetic data, typically in the form of OCR output for use in training the model associated with the specific template with as little as a single original source document used for training. It will be noted that to the extent that a significant number of source documents are available for training and/or the available source documents include machine readables, then the generation of synthetic data may not be required as disclosed herein and, accordingly, the process may occur, instead, as described in co-pending application (US Serial No. 18/426,991 entitled "Generative AI System and Method for Key and Value Pair Information Extraction from Documents") assigned to the assignee of the present invention.

In some embodiments of the present invention, GMS 120 is trained by first labeling category and key value information for identification documents to be processed by the system of the present invention. So, for example, at Step 210, and in connection with training the system to extract key-value information, desired category and key-value pairs are labeled as desired. This might include, by way of example, a variety of categories such as LAST NAME, FIRST NAME, COUNTRY, DATE OF BIRTH, DATE OF ISSUE, DATE OF EXPIRATION as well as others. For each of these categories, a type of key or value may be assigned to the content extracted from the field in the document.

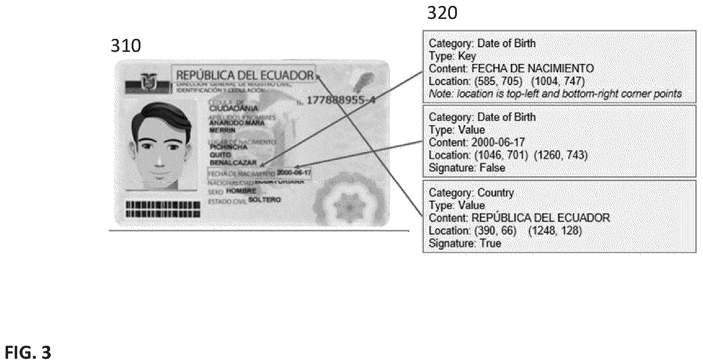

So, for example, selected categories for a Ecuadorian driver's license (see Fig. 3, for example) without machine readables might include CEDULA DE (ID CARD OF), ID NUMBER, APPELLIDOS Y NOMBRES (LAST NAME AND FIRST NAME), SEXO (SEX), etc.. For each of these categories, there may be both a key type and a value type such as, for example, LAST NAME AND FIRST NAME - key = APELLIDOS Y NOMBRES (the Spanish word for last name and first name) and value - ANARODO MARA MERRIN (the actual first and last name on a driver's license used for training). Similarly, for the COUNTRY category, there may only be a value which in this case might be "REPUBLICA DEL ECUADOR" which represents the value for the COUNTRY category field. In this case, the applicable field (REPUBLICA DEL ECUADOR) may also be considered a "signature" (see Fig. 3) wherein the textual content of that field will never change over multiple physical copies of a specific document type. Similarly, keys do not change and are therefore signatures by default. For example, "APELIDOS Y NOMBRES" will always appear in all physical copies of an Ecuadorian driver's license.

As will be readily apparent to one of skill in the art, the categories and key-value labeling desired can vary to a great degree while still remaining within the scope and spirit of the present invention. The selected labeling will depend on the specific data fields available on the applicable template document as well as the specific key-value pairs desired to be extracted from documents during the production phase.

Next, at Step 220, at least one sample source document for the desired template is provided to the system as a precursor for generating synthetic data. In practice, if there is access to multiple source sample documents they can be used, but as noted, the system of the present invention can function with only a single source document being available. During training, the document such as a driver's license is read by scanner 170 and an OCR output is obtained. In some embodiments, GMS 120 may be trained using the physical manifestation of the document such as the front of a driver's license as input to the model.

The system of the present invention, at Step 220 next generates a large amount of synthetic data for training the model. As discussed in more detail below, this synthetic data is generated in some embodiments by implementing a large number of variations on the data associated with the source document (or source documents, plural, if more than one source document is available) and thus generating a large amount of additional OCR output records containing variations on the original OCR output associated with a physical source document that has been scanned.

Once generated, the collective set of variations on the original source document is used to train the model for the specific template at Step 230. In some embodiments, the performance metrics associated with the model once trained with synthetic data is measured also at step 230. This is accomplished through the use of ground truth data associated with the synthetic data that has been generated. Because the generation of the synthetic data (in the form of additional OCR records) necessarily implies knowledge of the actual key-value data associated with each of the variations, ground truth is thus available to assist with the training of the production model.

Once a minimum level of performance is achieved, the process continues to Step 240 at which point the trained model is tested against real data. Testing with respect to real data includes two categories. Some documents contain machine-readable components, such as barcodes, MRZs, or QR codes, which encode the textual information displayed in the document. For these, ground truth can be derived by decoding the machine-readable elements. For documents without machine-readable components, the document examples are manually labeled to establish the ground truth.

Performance metrics are determined and assessed at Step 240 and once a minimum level of performance is achieved, the system is ready for production use at Step 250 Once the model is tested and validated on real data, it can be deployed to production. In some embodiments, each prediction field generates a corresponding confidence score. The thresholds for these confidence scores are optimized based on testing with real-world data. As noted above and as discussed in more detail below, training of the model can continue while in the production phase using the benefit of production operations to enhance the performance of the model.

In particular and in some embodiments, training occurs to a large part prior to placing system 100 in production but the effectiveness of the model may continue to be enhanced during the production phase using the inputs received during usage in production to continually enhance the model in order to achieve better and better results with continued usage. These enhancements and the continued betterment of the model is achieved through machine learning techniques as applied to a machine learning model.

A "machine learning model" or "model" as used herein, refers to a construct that is trained using training data to make predictions or provide probabilities for new data items, whether or not the new data items were included in the training data. Examples of models include: neural networks (traditional, deeps, convolution neural network (CNN), recurrent neural network (RNN)), support vector machines, decision trees, decision tree forests, Parzen windows, Bayes, clustering, reinforcement learning, probability distributions, decision trees, and others. Models can be configured for various situations, data types, sources, and output formats.

Training data may, for example, be stored in data storage 180 for use during production processing of documents and images. So, for example, as GMS 120 continues to get better trained on Ecuadorian driver's license layouts and expected key-value pairs, these learnings can be stored in data storage 180 for later usage. As additional document types are made available to KVES 100 either during training or during production, or both, the model, as represented in the stored data structure contained within data storage 180, for example, can be continually improved and broadened in terms of scope of documents and images for which it is trained.

A single KVES 100, then, may be trained to process a multitude of documents types such as driver's licenses from various states and countries, passports from various countries, social security cards, birth certificates from various jurisdictions and a practically unlimited set of other documents and images where key-value pairs extracted therefrom may be useful in downstream applications.

According to the teachings of the present invention, in some embodiments thereof, the trained model is configured to identify patterns and features in the training data to enhance the model's understanding of expected layouts, data fields and data types associated with various classifications of documents and images. Therefore, at the time of production, the model applies these learned patterns and features to examples in the wild, and generates key-value pairs based on optical scanning without the aforementioned drawbacks of prior art two stage OCR systems and methodologies.

With reference now to FIG. 3, the operation of KVES 100 under the direction of training control 120a in connection with category and key value labeling is discussed. This processing is referenced as step 210 in FIG. 2. By way of example, it may be desirable to train the system of the present invention to extract key-value pairs from Ecuadorian driver's licenses that are later presented to the system in production mode. In this example, a single instance of an Ecuadorian driver's license 310 may be made available to the system such that a category and key labeling function 320 may be applied to determine available categories and key value pairs.

In the example of FIG. 3, the system has identified and labeled the following categories and key value pairs in connection with the initial training process which occurs at step 210 (FIG. 2) of the overall process:
- Date of Birth Category Key - Content = FECHA DE NACIAMENTO along with expected location data
- Date of Birth Category Value - Content = 2000-06-17 along with expected location data
- Country Category Value - Content = REPUBLICA DEL ECUADOR along with expected location data and SIGNATURE notation.
These key value pairs can be selected by the system of the present invention in some embodiments or manually by a user via admin client 140 in other embodiments or some combination of the two. As will be noted, various combinations of categories and key-value pairs which represent a subset or all of the available information on the source document can be selected with all such combinations remaining within the scope and spirit of the present invention. For example, other categories and key-value pairs based on data available on the source document such as address, driver's license number, gender, etc. could also be used.

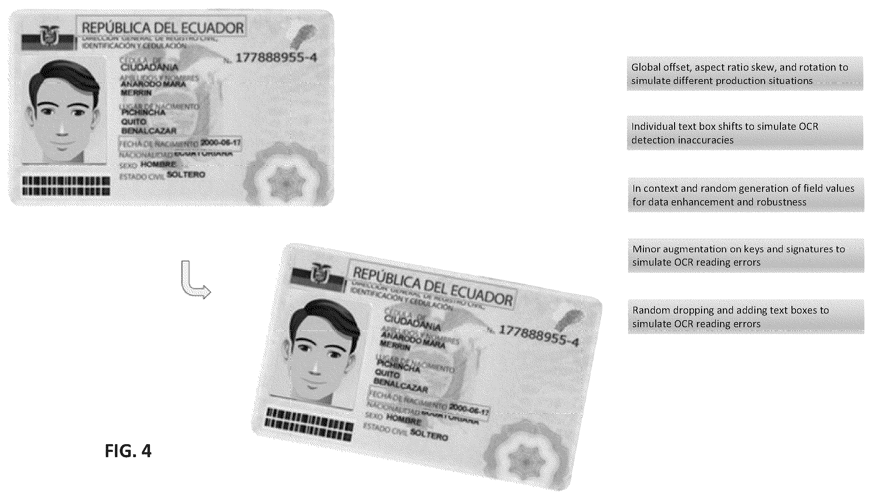

With reference now to FIG. 4, a discussion of model training using variations on one or more source documents is now provided. In some embodiments, multiple document types (e.g. driver's licenses from multiple different countries and/or multiple different US states) are combined into a single model so that the model can be used to extract key-value pairs from a broad range of documents at production time. However, in alternate embodiments, models may be specific to one or a small number of document types.

As part of the model training according to the teachings of the present invention, and according to some embodiments thereof, a very large number of variations of data elements are created with respect to the original source document. While some of the specific techniques for creating these variations are shown in FIG. 4 and discussed herein, it will be readily understood that other and different techniques for generating variations are possible while remaining within the scope and spirit of the present invention.

According to the teachings of the present invention, through the generation of large combinations of visual variations based on one or more original source documents, a large amount of synthetic data can be produced and used by the model such that the model is effective in connection with recognizing errors and variations on actual input documents during production and so that the model can extract key value pairs from documents associated with the templates of source documents. Examples of techniques that may be applied in order to create variations are as follows:
1) Applying a random global offset to all fields in the document. All of the boxes with data contained therein could be moved by a set linear amount in any direction including right, left, up down, diagonally etc. The images that result from applying these global offsets are then fed into the model during training.
2) Applying a random aspect ratio skew to some or all fields in the document. Multiple sets of variations may be generated by applying different aspect ratio skews to some or all of the fields. The images that result from applying these aspect ratio skews are then fed into the model during training.
3) Applying a random rotation to some or all fields in the document. This is the example shown in Fig. 4. Multiple sets of variations may be generated by applying different rotation amounts (e.g. 10 degrees, 20 degrees, etc.) to some or all of the fields or to the document as a whole. The images that result from applying these rotations are then fed into the model during training.
4) Applying random position shifts individually to some or all fields in the document. Multiple sets of variations may be generated by applying linear shifts to various fields and combination of fields. For example, a set of variations can be generated by only shifting the LAST NAME field 2mm to the right, then 3mm to the right, etc. The images that result from applying these individual shifts are then fed into the model during training.
5) In context and random generation of field values (third box on the right of Fig. 4) - There are two approaches to generating values for a value field: in-context generation and random generation. Take the date value field as an example. In-context generation produces various date formats, such as 2023-11-02, Nov 02, 2023, 02.11.2023, or 02.11.23. The system can also adapt to the specific language of the document, for instance, "2 de Noviembre de 2023." While the format is contextually appropriate, the actual date can still be randomly selected. Alternatively, another approach is purely random generation. For instance, even for a date field, random generation might produce outputs like "asd&NGW#." To ensure model robustness, a mix of both methods is used in practice, with some embodiments using about 80% of the synthetic data being contextually generated and the remaining 20% being random. This applies to all value fields, such as dates, names, and document numbers.
6) Minor augmentation on keys and signatures (fourth box on the right of Fig. 4) - This applies specifically to key and signature value fields. As mentioned earlier, these fields remain consistent across copies of a specific document type, such as "APELLIDOS" or "REPUBLICA DEL ECUADOR." However, in real-world scenarios, OCR may introduce reading errors. To simulate these errors, the system can apply minor augmentations to key and signature value fields. For example, "APELLIDOS" might become "APELLIDOS," or "REPUBLICA DEL ECUADOR" could be generated as "REPUBLICA DEL EC UADOR."
7) Random deletion, modification and/or addition of data/text in some or all fields in the document. Multiple sets of variations may be generated by deleting, modifying and/or adding text to some of the data values in the source document. Some or all of the data in one or more of the fields can be removed to generate a set of variations. An almost unlimited set of possibilities for generating synthetic data in this manner exists. The images that result from applying these changes to document data are then fed into the model during training

By way of example only, the top license document in FIG. 4 shows an example of an original source document used for training. The bottom license document in FIG. 4, in turn, shows an example of a variation on this original source document that may be generated by the system of the present invention. In this case, a fixed rotation of approximately 10-20 degrees clockwise has been applied to each of the to the document as a whole. Both the original as well as the varied document and many other variations on the source document may be used in training the model according to some embodiments of the present invention.

The concept behind using synthetic data to train a model begins with a single example of a specific document type, followed by massive synthetic generation of data with various variations. These variations address three key aspects: 1) real-world conditions when people capture document images, 2) potential OCR errors if OCR is used as a preprocessing step, and 3) enhancing model robustness and generalization.
In real-world scenarios, the document may appear anywhere in the final image, often near the center, and may be captured in various orientations, though typically aligned upright with respect to the text. The document or camera may also be at different angles, resulting in images with varying perspective distortions or aspect ratios. These are the types of augmentations that the system of the present invention aims to capture during synthetic data generation.

Secondly, if OCR is used to detect text on the document, individual text fields may be slightly misaligned or misread due to OCR inaccuracies. To simulate this, the system of the present invention may apply augmentations that shift the location of individual fields and introduce minor errors in key and signature fields to mimic OCR errors.

Additionally, the system of the present invention seeks to build a model that is not only layout-specific but also robust in understanding the semantic meaning of keys and their geometric relationships to the corresponding values in the document. For example, instead of only using common last names for the field labeled "APELLIDOS," the system may randomly generate values like "UHDNGDSE." This allows the model to infer that "UHDNGDSE" is the value associated with "APELLIDOS" based on the semantic meaning of the value and the value's proximity to the key, ensuring the model doesn't overfit to common Spanish last names but can generalize to rare or unfamiliar ones.

Because the synthetic data generated by the system of the present invention comes with known ground truth, the synthetic data can be properly used to train the model. By considering the factors mentioned above, the resulting model is robust, generalizable, and well-trained for real-world use cases.

Once one or more models are trained, and with reference to FIG. 2, these models can be trained both using synthetic data (see Step 230) and then again using real data (see Step 240) Upon completion of testing at Step 240, the system may enter production mode at Step 250 wherein actual document data is provided to the system and key-value pairs are extracted therefrom using the trained and tested model(s). At this point, GMS 120 has been trained so that it can receive scanned document data "in the wild" via scanner 170. Given the training of the model, it is now possible to extract key-value pairs from these documents with great accuracy even though the scanned data is reflective only of non-formatted optical data. This is achieved through the use of the trained GMS 120 model which accepts an in the wild document or image as input and provides, as output, a set of key-value pairs extracted from that document or image wherein these key-value pairs are likely to accurately reflect the intended fields and data for those fields as contained on the original document.

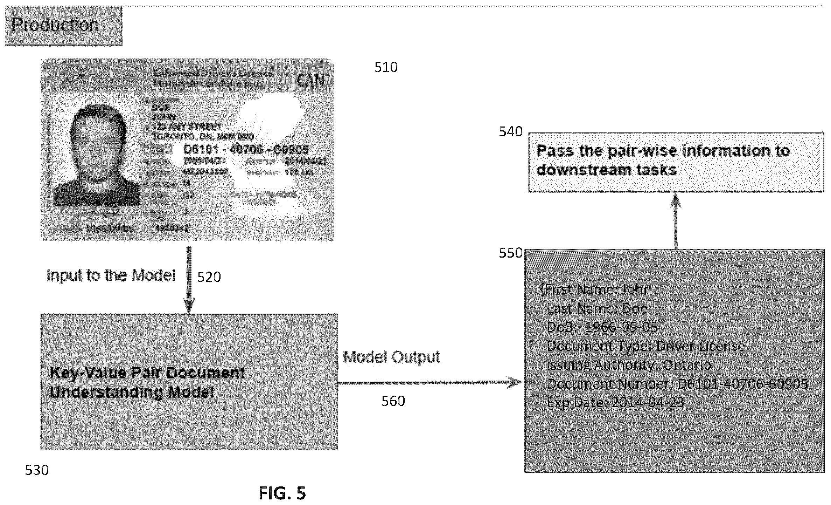

With reference now to FIG. 5, and in connection with the production process in some embodiments, an exemplary document or image 510, for example, a driver's license, is scanned by scanner 170. The optical data captured is next presented as input to the trained model 520. KVES 100 then applies the model 530 using the document characteristics expected in connection with the document type from the trained model (which may be contained in data storage 180) to produce a model output 560 which consists of key-value pairs extracted from the original document 510. These key-value pairs 550 may then be passed 540 to other systems, subsystems and/or downstream applications where the key-value pairs can be used for further processing.

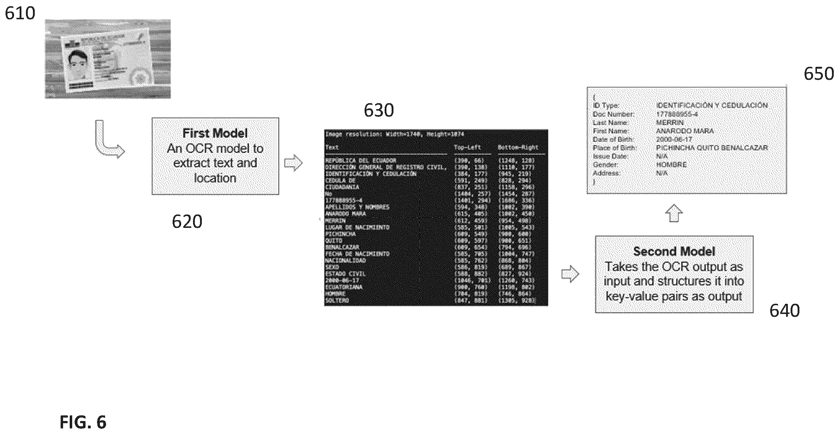

Turning now to FIG. 6, a discussion of the application of the models of the presentation invention as directed to the extraction of key-value pairs from original document 610 is provided. According to the teachings of the present invention, an OCR model (first model) 620 is applied to the scanned image of original document 610. This generates OCR output 630 which contains both key and value data as well as location data with respect to each of the foregoing.

Next, the trained second model 640 takes the OCR output 630 as input and provides extracted key-value pairs as output 650. This key-value pair data 650 may be used by KVES 100 or provided to other downstream applications such as identity verification applications as desired and/or required.

In some embodiments of the present invention, GMS 120 may continually train to enhance performance even during operation in production. In this case, the mapping between the originally extracted key-value pairs generated by GMS 120 and expected outcomes from the model can be analyzed both in terms of accuracy as well as consistency in the pixel to assess improve the model on an iterative basis as operation in production continues.

Potential applications of the system and methodologies of the present invention as described herein include but are not limited to text extraction from structured and unstructured documents, document fraud prevention and identity verification, document digitization, print material indexing, automated data entry, inventory management, restaurant order digitization, vehicle identification and law enforcement, patient record digitization as well as many more applications and in many more contexts.

The present embodiments are not limited to the particular embodiments illustrated in the drawings and described above in detail. Those skilled in the art will recognize that other arrangements could be devised. The present embodiments encompass every possible combination of the various features of each embodiment disclosed. One or more of the elements described herein with respect to various embodiments can be implemented in a more separated or integrated manner than explicitly described, or even removed or rendered as inoperable in certain cases, as is useful in accordance with a particular application While the present embodiments have been described with reference to specific illustrative embodiments, modifications and variations of the present embodiments may be constructed without departing from the spirit and scope of the present embodiments as set forth in the following claims.

While the present embodiments have been described in the context of the embodiments explicitly discussed herein, those skilled in the art will appreciate that the present embodiments are capable of being implemented and distributed in the form of a computer-usable medium (in a variety of forms) containing computer-executable instructions, and that the present embodiments apply equally regardless of the particular type of computer-usable medium which is used to carry out the distribution. An exemplary computer-usable medium is coupled to a computer such the computer can read information including the computer-executable instructions therefrom, and (optionally) write information thereto. Alternatively, the computer-usable medium may be integral to the computer. When the computer-executable instructions are loaded into and executed by the computer, the computer becomes an apparatus for practicing the embodiments. For example, when the computer-executable instructions are loaded into and executed by a general-purpose computer, the general-purpose computer becomes configured thereby into a special-purpose computer. Examples of suitable computer-usable media include: volatile memory such as random access memory (RAM); nonvolatile, hard-coded or programmable-type media such as read only memories (ROMs) or erasable, electrically programmable read only memories (EEPROMs); recordable-type and/or re-recordable media such as floppy disks, hard disk drives, compact discs (CDs), digital versatile discs (DVDs), etc.; and transmission-type media, e.g., digital and/or analog communications links such as those based on electrical-current conductors, light conductors and/or electromagnetic radiation.

Although the present embodiments have been described in detail, those skilled in the art will understand that various changes, substitutions, variations, enhancements, nuances, gradations, lesser forms, alterations, revisions, improvements and knock-offs of the embodiments disclosed herein may be made without departing from the spirit and scope of the embodiments in their broadest form.

## Claims

1. A system configured to extract key-value information appearing on a subject document, the system comprising:
one or more processors configured to execute computer program modules comprising a first model and a physical storage capability;
a training computer program module operative to receive at least one source of training document data and process said training document data to generate synthetic key-value training data, said synthetic key-value training data being implemented as a first model;
a data extraction computer program module operative to extract said key-value information from said subject document through the use of said first model;
wherein said processing of said training document data to generate synthetic key-value training data comprises the generation of at least one variation with respect to said at least one source of training document data.

2. The system of claim 1 wherein said at least one source of training document data comprises data associated with at least one training document.

3. The system of claim 2 wherein said generation of at least one variation with respect to said at least one source of training document data comprises the application of a random global offset to at least one field in said at least one training document.

4. The system of claim 2 or claim 3 wherein said generation of at least one variation with respect to said at least one source of training document data comprises the application of a random rotation to at least one field in said at least one training document.

5. The system of claim 2, claim 3 or claim 4 wherein said generation of at least one variation with respect to said at least one source of training document data comprises the application of a random aspect ratio skew to at least one field in said at least one training document.

6. The system of any preceding claim further comprising a labeling computer program module operative to generate category and key-value information for a specific document template associated with said at least one source of training document data.

7. The system of any preceding claim wherein said at least one source of training document data does not include ground truth information.

8. The system of any preceding claim further comprising a second model, said second model implementing an optical character recognition functionality, and optionally wherein the output of said second model is provided to said data extraction computer program module as input to extract said key-value information from said subject document.

9. The system of any preceding claim wherein said subject document comprises one of the following: driver's license, passport, social security card, or voter identification card.

10. The system of any preceding claim wherein said first model is refined during production operation using data obtained in connection with said production operation.

11. A computer-implemented method of extracting key-value information appearing on a subject document, the method being implemented in a computer system comprising one or more processors configured to execute computer program modules, the method comprising the steps of:
receiving at least one source of training document data and processing said training document data to generate synthetic key-value training data, said synthetic key-value training data being implemented as a first model;
extracting said key-value information from said subject document through the use of said first model;
wherein said processing of said training document data to generate synthetic key-value training data comprises the generation of at least one variation with respect to said at least one source of training document data.

12. The method of claim 11 wherein said at least one source of training document data comprises data associated with at least one training document, and optionally wherein said generation of at least one variation with respect to said at least one source of training document data comprises: the application of a random global offset to at least one field in said at least one training document, and/or the application of a random rotation to at least one field in said at least one training document and/or the application of a random aspect ratio skew to at least one field in said at least one training document.

13. The method of claim 11 or claim 12 further comprising: the step of generating category and key-value information for a specific document template associated with said at least one source of training document data, and/or the step of implementing an optical character recognition functionality to train a second model, and optionally wherein the output of said second model is provided to said first model as input to extract said key-value information from said subject document.

14. The method of any of claims 11 to 13 wherein said at least one source of training document data does not include ground truth information.

15. The method of any of claims 11 to 13 wherein said subject document comprises one of the following: driver's license, passport, social security card, or voter identification card, and/or wherein said first model is refined during production operation using data obtained in connection with said production operation.
